# EUROPÄISCHE PATENTSCHRIFT

(11) **EP 0 955 302 B1**
(45) Veröffentlichungstag und Bekanntmachung des Hinweises auf die Patenterteilung: **12.06.2002**
(21) Anmeldenummer: 99108397.3
(22) Anmeldetag: 29.04.1999
(51) Int. Cl.: C07F 11/00, C07F 7/18, C07C 319/24

(54) **Verfahren zur Herstellung von Gemischen von Organosiliciumoligosulfanen mit einem hohen Anteil an Organosiliciumdisulfanen**
Process for preparing mixtures of organosilicon oligosulfanes with a high content of organosilicondisulfanes
Procédé de préparation de mélanges d'organosilica oligosulfanes à teneur élevée en organosilicium disulfanes

(30) Priorität: 30.04.1998 DE 19819373
(43) Veröffentlichungstag der Anmeldung: 10.11.1999
(73) Patentinhaber: Degussa AG, 40474 Düsseldorf (DE)
(72) Erfinder: Michel, Rudolf, 63579 Freigericht (DE); Münzenberg, Jörg Dr., 63457 Hanau (DE)

(56) Entgegenhaltungen:
- EP-A- 0 326 914
- US-A- 3 842 111
- US-A- 3 978 103
- DATABASE WPI Week 9543 Derwent Publications Ltd., London, GB; AN 95-332519 XP002900606 & JP 07 228588 A (SHINETSU CHEM. IND. CO. LTD.), 29. August 1995 (1995-08-29)

## Beschreibung

Die Erfindung betrifft die Herstellung von Organosiliciumoligosulfangemischen mit hohem Disulfananteil. Verfahren zur Herstellung von Oligosulfanen als solchen sind seit langem bekannt.

In der DE-PS 2141159 (= US-PS 3842111) wird ein Verfahren zur Herstellung von Bis(alkoxisilylalkyl)-oligosulfanen aus den entsprechenden Halogenalkylalkoxisilan und Alkalimetalloligosulfiden vorzugsweise in alkoholischer Lösung, beschrieben.
Man erhält auf diesem Wege jedoch nur Gemische von Sulfanen mit unterschiedlichen Kettenlängen.
Nach einem in der DE-PS 2712866 (= US-PS 4,129,585) beschriebenen Verfahren setzt man ein Alkalimetallalkoholat mit einem Halogenalkylalkoxisilan, Metall- bzw. Ammoniumhydrogensulfid und Schwefel in Gegenwart eines organischen Lösungsmittels um.
Die Herstellung der Alkalimetallalkoholatlösung ist jedoch mit einem großen Zeitaufwand verbunden, der eine technische Realisierung des Verfahrens unwahrscheinlich werden läßt. Aus der US-PS 5,466,848 ist ein Verfahren bekannt, bei dem man Schwefelwasserstoff mit einem Alkoxid umsetzt, das Reaktionsprodukt mit elementarem Schwefel behandelt und dann mit einem Halogenalkylalkoxisilan zu dem gewünschten Organosiliciumpolysulfan umsetzt.

Ebenso wird gemäß US-PS 5,489,701 mit Alkoxiden und Schwefelwasserstoff gearbeitet, einer bekanntlich sehr unangenehm zu handhabenden Verbindung.

In der JP-OS 7-228588 wird die Reaktion von wasserfreiem Natriumsulfid und Schwefel mit Halogen-alkoxisilanen beschrieben.
Man erhält auf diesem Weg ein Gemisch von Polysulfanen, wie Versuche zeigten.
Verwendung finden siliciumorganische Polysulfane, insbesondere das Bis(triethoxysilylpropyl)tetrasulfan, in Kombination mit hochaktiven Kieselsäurefüllstoffen bei der Herstellung von vulkanisierten Kautschukartikeln, insbesondere Reifen.
Die vorteilhafte Verwendung von Disulfanen hoher Reinheit im Hinblick auf Verarbeitung und Eigenschaften der Vulkanisate wird in der EP-A 0732 362 (= US-PS 5,580,919) und bei Panzer (L. Panzer, American Chem. Soc., Rubber Div. Meeting 1997) beschrieben.

Es ist bekannt, das für die Disulfanherstellung notwendige Na₂Sₓ durch eine Umsetzung von Schwefel und Natrium in schmelzflüssiger Form zu gewinnen (DE-PS 3803 243).
Dabei ist zu berücksichtigen, daß der Schmelzpunkt des Polysulfids umso höher liegt, je kleiner sein Schwefelanteil ist. So hat z. b. das zur Erzeugung von Oligosulfan-gemischen hohen Disulfangehalts notwendige Na₂S₂ bereits einen Schmelzpunkt von 474 ° C. Für so hohe Temperaturen eignet sich nur noch Graphit als Reaktormaterial.
An den Schwierigkeiten, Bauteile für einen Reaktor in den notwendigen Abmessungen zu erhalten, scheitert jedoch die technische Realisierung.

Aufgabe der Erfindung ist es, ein Verfahren zur Herstellung von Organosiliciumdisulfanen zur Verfügung zu stellen, daß von einem aus den Elementen hergestellten Na₂Sₓ ausgeht.

Gegenstand der Erfindung ist ein Verfahren zur Herstellung von Organosiliciumdisulfanen der allgemeinen Formel

Z-Alk-Sₓ-Alk-Z (I)

in der Z für Gruppierungen 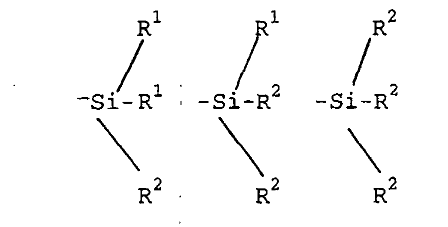 steht, in denen R¹ eine lineare oder verzweigte Alkylgruppe mit 1-6 C-Atomen, einen Cycloalkylrest mit 5-8 C-Atomen, den Benzylrest oder den gegebenfalls durch Methyl, Ethyl oder Chlor substituierten Phenylrest darstellt,
R² für eine Alkoxigruppe mit linearer oder verzweigter Kohlenstoffkette mit 1-6 C-Atomen oder für eine Cycloalkoxigruppe mit 5-8 C-Atomen, die Phenoxigruppe oder die Benzyloxigruppe steht, wobei R¹ und R² jeweils gleiche oder verschiedene Bedeutungen haben können,
Alk bevorzugt einen zweiwertigen, gesättigten, linearen oder verzweigten Kohlenwasserstoffrest mit 1-10 C-Atomen, bevorzugt Methylen sowie vorzugsweise Ethylen, i-Propylen, n-Propylen, i-Butylen oder n-Butylen, aber auch n-Pentylen, 2-Methylbutylen, 3-Methylbutylen, n-Pentylen, 1,3-Dimethylpropylen und 2,3-Dimethylpropylen bedeuten, und n-Propylen besonders geeignet ist, oder der Gruppe 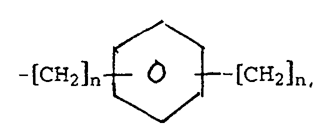 darstellt
mit
n = 1 - 4, und
x = 1,5 is 3,0
in einer zweistufigen Reaktion, die dadurch gekennzeichnet ist, daß man
1. Suspensionen von feinverteiltem Natrium mit Schwefel in etwa äquimolaren Mengen in einem inerten organischen Lösungsmittel bei Temperaturen oberhalb von 98 ° C mit einander umsetzt,gegebenenfalls wäscht und trocknet,
2. das Na₂Sₓ teilweise oder vollständig in einem inerten organischen Lösungsmittel löst oder suspendiert, diese Lösung oder Suspension mit einer Organosiliciumverbindung der allgemeinen
   Formel (II)

   Z - Alk- Hal (II),

   in der Z und Alk die oben angegebenen Bedeutungen haben, und Hal ein Chlor oder Bromatom ist, in den der Stöchiometrie des herzustellenden Na₂Sₓ entsprechenden Mengen umsetzt und das gewünschte Oligosulfangemisch isoliert.
   Der Anteil des Disulfans liegt bevorzugt bei 55 bis 100 Gew.-%, insbesondere bei 55 bis 75 Gew.-%.

Zu diesem Zweck filtriert man das ausgefallene anorganische Halogenid und trennt das Lösungsmittel destillativ ab.

Als Lösungsmittel für Schritt 1 sind die bekannten aliphatischen Kohlenwasserstoffe mit einer C-Kettenlänge von 7 bis 12 C-Atomen, insbesondere von 7 bis 9 C-Atome, aromatische Kohlenwasserstoffe, wie z. B. Toluol, Xylol, Ethylbenzol, Mesitylen, Naphthalin, Tetrahydronaphthalin, oder hochsiedende Ether, wie z. B.Ethylenglycoldiethylether, Dibutylether, Dipentylether, Anisol oder Gemische dieser Lösungsmitt geignet. Gemeinsam ist diesen Lösungsmitteln, das sie bevorzugt oberhalb von 98 ° C sieden und Schwefel zumindest teilweise zur Lösung bringen.

Vorteilhaft liegt das Natrium in Form kleiner Schmelzkügelchen vor, so daß keine Passivierung der Oberflächen durch die Reaktionen mit Schwefel eintritt.

Es ist jedoch auch möglich, Lösungsmittel mit einem niedrigeren Siedepunkt einzusetzen, wenn unter Druck gearbeitet wird. Letztere Variante gilt natürlich auch für die höhersiedenden Verbindungen.
In einer bevorzugten Ausführungsform tropft man in die Suspension von Schwefel eine Suspension feinverteilten Natriums im gleichen Lösungsmittel ein.

Es ist jedoch ebenso möglich, feinteiligen Schwefel in eine Natriumdispersion einzudosieren.
In jedem Fall muß beachtet werden, daß es sich bei der Umsetzung dieser Elemente um eine stark exotherme Reaktion handelt, die der Fachmann aber beherrscht.

Die Umsetzung erfolgt bei Temperaturen >98 ° C bis 250 ° C, insbesondere 100 bis 150 ° C.
Eine weitere vorteilhafte Ausführungsform betrifft ein Verfahren, bei dem man Natrium und Schwefel in Form von Suspensionen in denselben Lösungsmitteln gleichzeitig an örtlich auseinanderliegenden Stellen eines zylindrischen Reaktors zuführt, wobei die Schwefel-Zugabe außerhalb der Zone der Reaktion zwischen Natrium und Schwefel und in der Rührströmung möglichst weit vor der Zugabe für das Natrium erfolgt.

Die Ausgangssubstanzen gemäß Formel (II) für die 2. Stufe des Verfahrens können nach bekannten Verfahren hergestellt werden und sind allgemein verfügbar.

Als organische Lösungsmittel sind im Prinzip alle polaren Substanzen einsetzbar, in denen das Na₂Sₓ wenigstens teilweise löslich ist, und die nicht mit der Organosiliciumverbindung gemäß Formel (II) reagieren.

Vorzugsweise kommen als organische Lösungsmittel ein linearer oder verzweigter Alkohol mit 1-5 C-Atomen, wie z. B. Methyl-, Ethyl-, Propyl-, Butyl- oder Pentylalkohol zum Einsatz.

Geeignet sind auch Cycloalkylalkohole mit 5 bis 8 C-Atomen, Phenol oder Benzylalkohol.

Sinnvollerweise wird, um z. B. eine Umesterung zu vermeiden, der jeweils zur Gruppe R² korrespondierende Alkohol verwendet. Gegebenenfalls kann auch die Verwendung eines Gemischs dieser Alkohole von Vorteil sein, z. B. wenn R² in einer Verbindung gemäß Formel (I) unterschiedliche Bedeutungen besitzt.

Man erhält erfindungsgemäß ein sehr reines Disulfan mit einer mittleren Schwefelkettenlänge von 1,97 bis 2,06, das die nach dem Stand der Technik hergestellten Produkte ohne weiteren Reinigungsschritt deutlich in Bezug auf den Disulfidgehalt übertrifft.

### Beispiel 1

In einem 500 ml Dreihalskolben mit Rückflußkühler, gerührtem Tropftrichter und Rührer wurde zu einer Suspension 16,8 g (0,52 mol) Schwefel in 100 ml Xylol bei 140°C eine Suspension von 11,5 g (0,50 mol) feinverteiltem Natrium in 100 ml des gleichen Lösungsmittel unter Rühren zugetropft. Die Reaktion ist deutlich exotherm. Nach Abklingen der Exothermie nach dem Zutropfen wird ein gräulich-gelbes heterogenes Reaktionsgemisch erhalten, das weitere 30 min bei 140°C gehalten wird. Nach Abkühlen wird der Feststoff abfiltriert und mit einem niedrigsiedenden Petrolether ausgewaschen. Der Filterkuchen wird durch Durchblasen von trockenem Stickstoff getrocknet.

Der getrocknete Filterkuchen wird in einem 500 ml Dreihalskolben mit Rührer, Tropftrichter und Rückflußkühler in 220 ml Ethanol vorgelegt. Es entsteht eine gelbe Lösung, die sich bis auf 65°C erwärmt. Nach Aufheizen auf 80°C wird 114,4 g (0,48 mol) 3-Chlorpropyltriethoxysilan zu der siedenden Lösung zugetropft. Nach Ende des Zutropfens läßt man die Reaktionsmischung noch 2,5 h unter Rühren reagieren, kühlt ab und filtriert vom Ungelösten ab. Der Filterkuchen wird vier mal mit jeweils 50 ml Ethanol nachgewaschen und die Filtrate mit der Hauptmenge vereinigt. Nach Eindampfen im Vakuum bei 120°C und einem Endvakuum von 40 mbar erhält man 109,9 g einer braunen Flüssigkeit, die nach ihrem ¹H-NMR-Spektrum aus einem Oligosulfangemisch der allgemeinen Formel [(EtO)₃SiCH₂CH₂CH₂]₂Sₓ mit einer mittleren Schwefelkettenlänge von 2,06 entspricht. Die Ausbeute beträgt 92 % bezogen auf eingesetztes Natrium.

### Beispiel 2

In einem 250 ml Dreihalskolben mit Rückflußkühler, Feststoffdosierung, Ultra-Turrax und Rührer werden 11,5 g (0,5 mol) Natrium in 100 ml Xylol vorgelegt. Nach Aufheizen auf 110°C wird das Natrium mit einem Ultra-Turrax fein dispergiert. Anschließend werden 16,0 g (0,5 mol) Schwefel über die Feststoffdosierung zugegeben, wobei es bei Kontakt mit der Na-Suspension sofort zu einer heftigen Reaktion unter Feuererscheinung kommt. Im Verlauf der Schwefel-Dosierung wird der Ultra-Turrax 12 mal für jeweils 1 min zur Redispergierung des Natrium betrieben. Nach Ende der Dosierung wurde noch 1 h unter Rühren bei 140 - 142°C stehen gelassen. Nach Abkühlen wurde der entstandene gelbe Feststoff abfiltriert und durch Durchblasen von trockenem Stickstoff getrocknet.

Der getrocknete Filterkuchen wird in einem 500 ml Dreihalskolben mit Rührer, Tropftrichter und Rückflußküler in 220 ml Ethanol vorgelegt. Es entsteht eine gelbe Lösung, die sich bis auf 40°C erwärmt. Nach Aufheizen auf 80°C wird 120,4 g (0,50 mol) 3-Chlorpropyltriethoxysilan zu der siedenden Lösung zugetropft. Nach Ende des Zutropfens läßt man die Reaktionsmischung noch 2 h unter Rühren reagieren, kühlt ab und filtriert vom Ungelösten ab. Der Filterkuchen wird vier mal mit jeweils 50 ml Ethanol nachgewaschen und die Filtrate mit der Hauptmenge vereinigt. Nach Eindampfen im Vakuum bei 120°C und einem Endvakuum von 40 mbar erhält man 110,6 g einer braunen Flüssigkeit, die nach ihrem ¹H-NMR-Spektrum aus einem Oligosulfangemisch der allgemeinen Formel [(EtO)₃SiCH₂CH₂CH₂]₂Sₓ mit einer mittleren Schwefelkettenlänge von 1,97 entspricht. Die Ausbeute beträgt 93 % bezogen auf eingesetztes Natrium.

## Patentansprüche

1. Verfahren zur Herstellung von Gemischen von Organosiliciumoligosulfanen mit einem hohen Disulfananteil der allgemeinen Formel
Z-Alk-Sₓ-Alk-Z (I)
in der Z für Gruppierungen 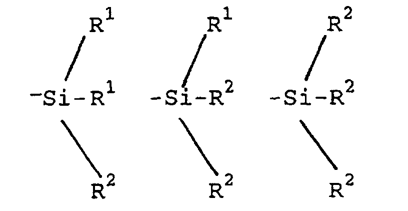 steht, in denen R¹ eine lineare oder verzweigte Alkylgruppe mit 1-6 C-Atomen, einen Cycloalkylrest mit 5-8 Atomen, den Benzylrest oder den gegebenfalls durch Methyl, Ethyl oder Chlor substituierten Phenylrest darstellt,
R2 für eine Alkoxigruppe mit linearer oder verzweigter Kohlenstoffkette mit 1-6 C-Atomen oder für eine Cycloalkoxigruppe mit 5-8 C-Atomen, die Phenoxigruppe oder die Benzyloxigruppe steht, wobei R¹ und R² jeweils gleiche oder verschiedene Bedeutungen haben können,
Alk einen zweiwertigen gesättigten linearen oder verzweigten Kohlenwasserstoffrest mit 1-10 C-Atomen oder die Gruppe 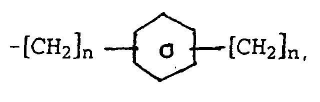 darstellt
mit
n = 1 - 4, und
x = 1,5 bis 3,0
darstellt
in einer zweistufigen Reaktion,
**dadurch gekennzeichnet,**
**daß** man
1. Suspensionen von feinverteiltem Natrium mit Schwefel in der der Stöchiometrie des herzustellenden Na₂Sₓ entsprechenden Mengen in einem inerten organischen Lösungsmittel bei Temperaturen oberhalb von 98 ° C unter Inertgas umsetzt, das sich bildende Na₂Sₓ abfiltriert, gegebenenfalls wäscht und trocknet,
2. dieses Na₂Sₓ teilweise oder vollständig in einem inerten organischen Lösungsmittel löst oder suspendiert, es mit Verbindungen der allgemeinen Formel (II)
Z - Alk- Hal (II),
in der Z und Alk die oben angegebenen Bedeutungen haben, und Hal ein Chlor oder Bromatom ist, umsetzt und das gewünschte Organosulfangemisch isoliert.

2. Verfahren gemäß Anspruch 1,
**dadurch gekennzeichnet,**
**daß** man organische Lösungsmittel mit einem. Siedepunkt >98 ° C einsetzt, in denen sich Schwefel zumindest teilweise löst.

3. Verfahren gemäß den Ansprüchen 1 oder 2
**dadurch gekennzeichnet,**
**daß** man die Umsetzung unter Druck durchführt.

4. Verfahren gemäß den Ansprüchen 1 bis 3,
**dadurch gekennzeichnet,**
**daß** man Natrium und Schwefel in Form von Suspensionen in denselben Lösungsmitteln gleichzeitig an örtlich auseinanderliegenden Stellen eines zylindrischen Reaktors zuführt.

## Claims

1. Process for the preparation of mixtures of organosilicon oligosulfanes containing a high proportion of disulfanes of the general formula
Z-Alk-Sₓ-Alk-Z (I)
in which Z is groupings 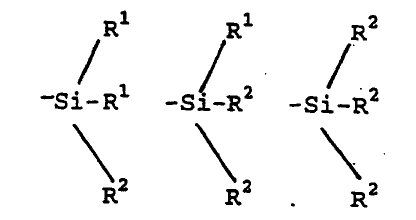 in which R¹ is a linear or branched alkyl group having 1 - 6 C atoms, a cycloalkyl radical having 5 - 8 C atoms, the benzyl radical or the phenyl radical optionally substituted by methyl, ethyl or chlorine, and
R² is an alkoxy group with a linear or branched carbon chain having 1 - 6 C atoms, a cycloalkoxy group having 5 - 8 C atoms, the phenoxy group or the benzyloxy group,
it being possible in each case for R¹ and R² to have identical or different meanings,
Alk is a divalent, saturated linear or branched hydrocarbon radical having 1 - 10 C atoms, or the group 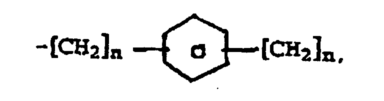 where
n = 1 - 4, and
x = 1.5 to 3.0,
in a two-step reaction, **characterized in that**
1. suspensions of finely divided sodium are reacted with sulfur in amounts corresponding to the stoichiometry of the Na₂Sₓ to be prepared, in an inert organic solvent, at temperatures above 98°C, under an inert gas, and the Na₂Sₓ formed is filtered off, optionally washed and dried, and
2. this Na₂Sₓ is partially or completely dissolved or suspended in an inert organic solvent and reacted with compounds of general formula (II):
Z - Alk - Hal (II)
in which Z and Alk are as defined above and Hal is a chlorine or bromine atom, and the desired organosulfane mixture is isolated.

2. Process according to Claim 1, **characterized in that** organic solvents boiling at >98°C are used in which sulfur is at least partially soluble.

3. Process according to Claim 1 or 2, **characterized in that** the reaction is carried out under pressure.

4. Process according to Claims 1 to 3, **characterized in that** sodium and sulfur in the form of suspensions in the same solvents are introduced simultaneously into a cylindrical reactor at spatially separated points.

## Revendications

1. Procédé de préparation de mélanges d'organosilicium oligosulfanes ayant une proportion élevée en disulfanes, de formule générale
Z-Alk-Sₓ-Alk-Z (I)
dans laquelle Z représente des groupements 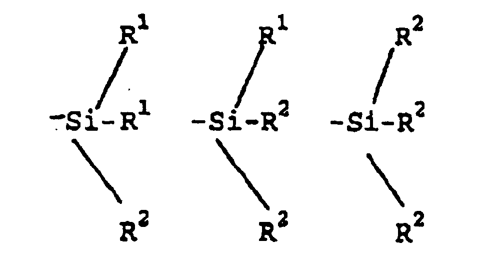 dans lesquels R¹ représente un groupe alkyle linéaire ou ramifié ayant de 1 à 6 atomes de carbone, un reste cycloalkyle ayant de 5 à 8 atomes. un reste benzyle ou le reste phényle éventuellement substitué par un méthyle, un éthyle ou par un chlore, R² représente un groupe alkoxy avec une chaîne carbonée linéaire ou ramifiée ayant de 1 à 6 atomes de carbone ou un groupe cycloalkoxy ayant de 5 à 8 atomes de carbone, le groupe phénoxy ou le groupe benzyloxy, pour lesquels R¹ et R² respectivement peuvent avoir les mêmes significations ou des significations différentes, Alk représente un reste d'hydrocarbure divalent saturé linéaire ou ramifié ayant de 1 à 10 atomes de carbone ou le groupe 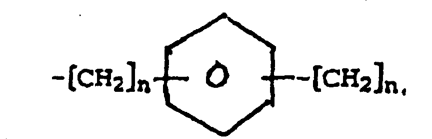 avec
n = 1 à 4,
x= 1,5 à 3.0
dans une réaction en deux stades,
**caractérisé en ce qu'**
1. on fait réagir une suspension de sodium finement divisé avec du soufre dans des quantités à peu près équimolaires dans un solvant organique inerte, à des températures au-dessus de 98°C, éventuellement on la lave et on la sèche,
2. on dissout le Na₂Sₓ partiellement ou complètement dans un solvant organique inerte ou met en suspension, on fait réagir cette solution ou suspension avec un composé d'organosilicium de formule générale (II).
Z - Alk- Hal (II),
dans laquelle Z et Alk ont les significations indiquées ci-dessus et Hal est un chlore ou un atome de brome et on isole le mélange d'oligosulfanes désiré.

2. Procédé selon la revendication 1,
**caractérisé en ce qu'**
on met en oeuvre des solvants organiques ayant un point d'ébullition > 98°C dans lesquels le soufre se dissout au moins en partie.

3. Procédé conformément à l'une des revendications 1 ou 2,
**caractérisé en ce qu'**
on effectue la réaction sous pression.

4. Procédé conformément à l'une quelconque des revendications 1 à 3,
**caractérisé en ce qu'**
on amène le sodium et le soufre sous forme de suspensions dans les mêmes solvants simultanément à des emplacements séparés les uns des autres localement d'un réacteur cylindrique.
